(19) Europäisches Patentamt
European Patent Office
Office européen des brevets

(11) **EP 2 100 106 B1**

(12) **EUROPEAN PATENT SPECIFICATION**

(45) Date of publication and mention
of the grant of the patent:
**19.01.2011 Bulletin 2011/03**

(51) Int Cl.:
***G01F 1/84*** (2006.01)

(21) Application number: **07834593.1**

(86) International application number:
**PCT/NL2007/000277**

(22) Date of filing: **06.11.2007**

(87) International publication number:
**WO 2008/056976 (15.05.2008 Gazette 2008/20)**

(54) **CORIOLIS MASS FLOW METER USING FORCE SENSORS**

CORIOLIS-MASSENSTRÖMUNGSMESSER MIT KRÄFTESENSOREN

DÉBITMÈTRE MASSIQUE À EFFET DE CORIOLIS COMPRENANT DES CAPTEURS DE FORCE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **07.11.2006 NL 1032824**

(43) Date of publication of application:
**16.09.2009 Bulletin 2009/38**

(73) Proprietor: **C.C.M. Beheer B.V.**
**5674 CC Nuenen (NL)**

(72) Inventors:
• **SLUITERS, Johan Erhard**
**5737 PE Lieshout (NL)**
• **TAS, Marnix Aldert**
**5631 JL Eindhoven (NL)**
• **TIMMERMANS, Johannes Cornelis Maria**
**5521 NH Eersel (NL)**

(74) Representative: **Groeneveld, Yme Geert**
**Exter Polak & Charlouis B.V. (EP&C)**
**P.O. Box 3241**
**2280 GE Rijswijk (NL)**

(56) References cited:
**DE-A1- 4 327 052     DE-C1- 4 311 694**
**US-B1- 6 598 488**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to an apparatus and a method for measuring properties of a fluid, such as the density and/or the mass flow thereof. The invention also relates to a method for using an apparatus of this type. In particular, the invention relates to a flowmeter which utilises the Coriolis force.

The apparatus according to the invention is, for example, suitable for measuring an amount of fuel flowing through a tube, such as diesel in maritime applications.

An apparatus for measuring a mass flow of a fluid utilising the Coriolis force is known from US 4,776,220. The known apparatus comprises a flow tube provided with two curved measuring tubes which are attached in series and overlap each other in a central portion. An electromagnetic coil is attached between the overlapping central portion for causing the central portion to vibrate. Opposing ends of the measuring tubes are provided with sensors for measuring the deformation of the measuring tubes. If no medium is flowing through the measuring tubes, then the tubes move in phase. When a medium is flowing, the tubes deform as a result of the Coriolis force and thus become out of phase. The phase difference of the signals measured by the sensors is converted via electronics into a mass flow rate signal. The mass flow of the fluid is thus measured by measuring torsional vibrations resulting from the Coriolis force.

A drawback of the known apparatus is that material properties of the measuring tubes influence the measurement. The torsional and flexural stiffness of the material has, for example, an effect. There are measured elastic deformations of the measuring tubes that are influenced by external factors such as the temperature. The influence of material properties and the influencing of a measurement by external components connected to the measuring tubes and the properties of the material induce a margin of error in the results of the measurements.

US 6,598,488 B1 provides a liquid flowmeter which utilises the Coriolis effect. The flowmeter comprises a tube which is curved about a first axis. The tube can be caused to vibrate about a second axis perpendicular to the first axis. The tube is provided with a pair of flexible couplings to minimise forces by means of the stiffness of the tube. The flowmeter comprises a sensor for measuring the force in the direction of the first axis and means for deriving the liquid flow from the measured force.

In maritime applications, for example, such as on ships, the mass flowmeter is arranged in an environment having a relatively high temperature and/or having a relatively large number of vibrations. The above-described mass flowmeter has been found to be too inaccurate in an environment of this type.

The object of the present invention is to provide an apparatus of the above-mentioned type in which external components have less influence on measurements.

The object is achieved by an apparatus for measuring properties of a fluid, comprising:

- at least one flow tube provided with a curved portion;
- at least one actuator, coupled to the curved portion of the flow tube, for causing the curved portion to vibrate;
- at least two force sensors, coupled to opposing ends of the curved portion of the flow tube, for measuring a force applied thereto through the flow tube; and
- restriction means, coupled to the at least one flow tube, for restricting movement of the curved portion thereof in the direction of one or more degrees of freedom.

The term force sensors refers to relatively highly stiff sensors which allow hardly any movement in the measuring direction. The apparatus thus measures forces exerted thereon through the flow tube and no deflections, so a measurement taken is independent of material properties of the flow tube. In this connection, use is preferably made of stiff flow tubes which, in contrast to the above-described known flow tubes, hardly deform internally. A measurement taken from a stiff tube system of this type, in which forces are measured, is a distinguishing feature from the prior art, in which deformations or deflections of tubes are measured. The restriction means in this case isolate the measurement from environmental influences.

In a defined axis system, the x-axis is a longitudinal direction of the flow tube, the y-axis extends perpendicularly to the x-axis in the plane of the curved portion, and the z-axis is perpendicular to the x-axis and to the y-axis. In one embodiment, the restriction means allow rotation about the x-axis, rotation about the y-axis, and translation along the z-axis. In this case, the restriction means restrict movement in the direction of one or more of the remaining degrees of freedom. The best isolation from environmental influences is achieved if all remaining degrees of freedom are restricted. The use of, for example, elastically deformable restriction means has proven suitable to allow the desired degrees of freedom and thus to achieve sufficient restriction of the movement or rotation in the remaining degrees of freedom.

Preferably, the force sensors have a stiffness which is much greater than the stiffness of the portions of the flow tube or tubes for feeding and discharging to the environment.

The stiffness of the force sensors, including the mechanical connection to the flow tubes, is, for example, greater than the flexural stiffness of the feed and discharge portions of the flow tube or flow tubes by a factor of at least 10. In a preferred embodiment, the stiffness of the force sensors, including the mechanical connection to the flow tubes, is greater than the flexural stiffness of the feed and discharge portions of the flow tube or flow tubes by a factor of at least 50 to 100.

The lowest internal natural frequency of the curved portion of the at least one flow tube is preferably at least 2 times greater than the excitation frequency of the actuator.

In a preferred embodiment, a maximum deflection of the at least one actuator is approximately 0.2 mm, preferably about 0.5 mm. The force sensors preferably have a stiffness of greater than 1kN/$\mu$m, for example about 2kN/$\mu$m. The maximum deflection of the actuators is, for example, at least 500 times greater than the maximum deflection of the force sensors. In the case of a force, occurring in practice, of approximately 10 N, a deflection of the force sensors is at most approximately 0.01 $\mu$m.

The deflection at the site of the force sensors is therefore negligible, i.e. much smaller than the deflection at the site of the actuator. The sensors are, for example, attached at some distance from the actuator(s), at locations where the deflection can more or less be disregarded without disturbing the operation of the actuator.

The influence of material properties on the measurement is minimised by regarding the curved portion as a monolithic body. The monolithic body preferably has natural frequencies which are at least two times greater than the excitation frequency, i.e. the frequency at which the actuator is activated.

A second measure relates to minimising the influence of the feed and discharge tubes of the flow tube or flow tubes. The flexural stiffness of these portions is accordingly at least 10 times less than the stiffness of the force sensors. This prevents temperature-dependent diversion of forces via the feed and discharge tubes.

As a third measure, optionally in combination with the foregoing measures, the natural frequency of the curved portion in proximity to the torsional spring, which is formed by the feed and discharge tubes, is greater than the excitation frequency.

The feed and discharge parts of the flow tubes act as a torsional spring for the excitation movement but are flexural springs for the Coriolis force. After all, the direction of the excitation movement is perpendicular to the Coriolis moment. In this case, the torsional stiffness decreases linearly with the length of the tube but the flexural stiffness decreases with the length of the tube to the power of three. The ratio between the torsional and flexural stiffness is thus to be adjusted as a function of the length of the feed and discharge tubes. The purpose of the feed and discharge tubes is thus threefold, namely 1) the feeding and discharging of fluid; 2) torsional spring for excitation; and 3) flexural spring for the Coriolis force. Flanges are optionally attached in the feed and discharge tubes to reduce the flexural stiffness thereof without affecting the torsional stiffness.

In one embodiment, the apparatus comprises a single actuator, the centre of gravity of the curved portion being located at a distance Y(zw) = JO/(MO x Y(A1)), wherein the x-axis is a longitudinal direction of the flow tube, the y-axis extends perpendicularly to the x-axis in the plane of the curved portion of the flow tube, J0 is the moment of inertia for rotation about the x-axis, M0 is the mass of the curved portion of the flow tube including a calibration substance, such as water, and Y(A1) is the distance along the y-axis from the actuator.

In one embodiment, one or more weights (M1, M2, M3, M4) are attached to the curved portion. The mass balance may thus be adapted to a specific fluid by varying the mass and/or by displacing one or more of the weights.

With a single flow tube, the apparatus can be produced simply and therefore relatively inexpensively. Restricting the number of components reduces the risk of malfunction and the required maintenance.

In one embodiment, the apparatus comprises a counter-mass which has the same moment of inertia as the curved portion of the flow tube and to which the curved portion is connected by means of the force sensors and the at least one actuator. The actuator and the sensors can thus be isolated from the outside world to prevent disturbance by external influences.

In a further embodiment, the apparatus comprises a second flow tube which is attached parallel to the flow tube and provided with a second curved portion, the at least one actuator being coupled to the second curved portion, and the force sensors being coupled to opposing ends of the second curved portion of the second flow tube.

As a result of the fact that actuators are coupled to a curved portion at both ends, forces are exerted merely on the flow tubes. Force sensors are also attached at both ends to a curved portion of one of the flow tubes. Contact with the environment, and thus an error thereby induced, is reduced.

In one embodiment, the apparatus comprises stiffening means coupled to the curved portion of the flow tube and/or to the second curved portion of the second flow tube. The stiffening means increase the stiffness of the flow tubes, thus preventing deformations thereof. This reinforces the measuring principle of the present apparatus.

The stiffening means serve to stiffen the curved parts of the flow tube or flow tubes. The stiffening means can be connected thereto in a suitable manner, for example by clamping, welding, soldering and/or bonding.

In another embodiment, the stiffening means comprise a disc member. The disc member comprises, for example, a disc wherein the curved part of the flow tube substantially follows the circumference of the disc and is connected thereto in the above-described manner. This has been found to be effective for stiffening the construction and for increasing symmetry.

Preferably, the stiffening means are provided with strengthening ribs. The increased stiffness imparted by the ribs reinforces the principle of the present invention.

In a further embodiment, the at least one actuator comprises a first and a second actuator which are attached between opposing parts, preferably ends, of the stiffening means of the first and the second curved portion.

The first and/or the second flow tube is preferably provided on either side of the first and/or the second curved portion with bellows means for making the first or the second flow tube flexurally slack and torsionally stiff. The bellows means have the further advantage that they compensate for thermal expansion.

The restriction means comprise, for example, one or more sprits which are connected at one end to the respective flow tube and at an opposing end to a strengthening frame attached around the flow tube and/or the second flow tube. The sprits are flexible, so the flow tubes continue to transmit forces to the sensors but resist compressive and/or tensile forces and thus restrict movement of the flow tubes in the direction of the sprits. This prevents displacement of the curved parts of the flow tubes in the x- and y-directions (in the plane of the curved parts) and rotation about the z-axis (perpendicular to the plane of the curved parts).

According to another aspect, the invention provides a method for using an apparatus as described hereinbefore.

According to still another aspect, the invention provides a method for measuring properties of a fluid, including the following steps:

- conveying the fluid through at least one flow tube provided with a curved portion;
- causing the curved portion of the flow tube to vibrate by activating at least one actuator coupled thereto; and
- measuring a force using at least two force sensors coupled to opposing ends of the curved portion of the flow tube; and restricting, using restriction means coupled to the at least one fllow tube, movement of the curved portion thereof in the direction of one or more degrees of freedom.

The method utilises, for example, an apparatus substantially as described hereinbefore.

Further advantages and features of the present invention will become apparent from the appended drawings, in which:

Fig. 1 is a schematic plan view of a curved portion, provided with stiffening means, of a flow tube, suitable for an apparatus according to the present invention;

Fig. 2 is a schematic perspective view of another embodiment of the apparatus according to the present invention;

Fig. 3 is a perspective view of the flow tubes with actuators and sensors of the apparatus from Fig. 2; and

Fig. 4 is a perspective view of still another embodiment of the apparatus according to the present invention;

Fig. 5 is a schematic side view of a sprit;

Fig. 6 - 10 show examples of embodiments of a sprit for use in the apparatus from Fig. 3 or Fig. 4;

Fig. 11 is a perspective view of another embodiment of the apparatus according to the present invention;

Fig. 12 is a perspective view of another embodiment of the apparatus according to the present invention;

Fig. 13 is a schematic side view of the apparatus from Fig. 12;

Fig. 14 is a perspective view of still another embodiment of the apparatus according to the present invention;

Fig. 15 is a perspective view of a curved portion, provided with stiffening means, of a flow tube, suitable for an apparatus according to the present invention;

Fig. 16 shows an embodiment of an apparatus according to the invention provided with the flow tube from Fig. 15;

Fig. 17 is a side view in cross section of restriction means of the apparatus from Fig. 16;

Fig. 18 is a perspective view of an embodiment of restriction means;

Fig. 19 is a side view of an embodiment of restriction means;

Fig. 20 is a perspective view of an embodiment of restriction means;

Fig. 21 is a perspective view of an embodiment of an apparatus according to the invention;

Fig. 22 is a perspective view of another embodiment of an apparatus according to the invention; and

Fig. 23 is a schematic representation of forces and moments.

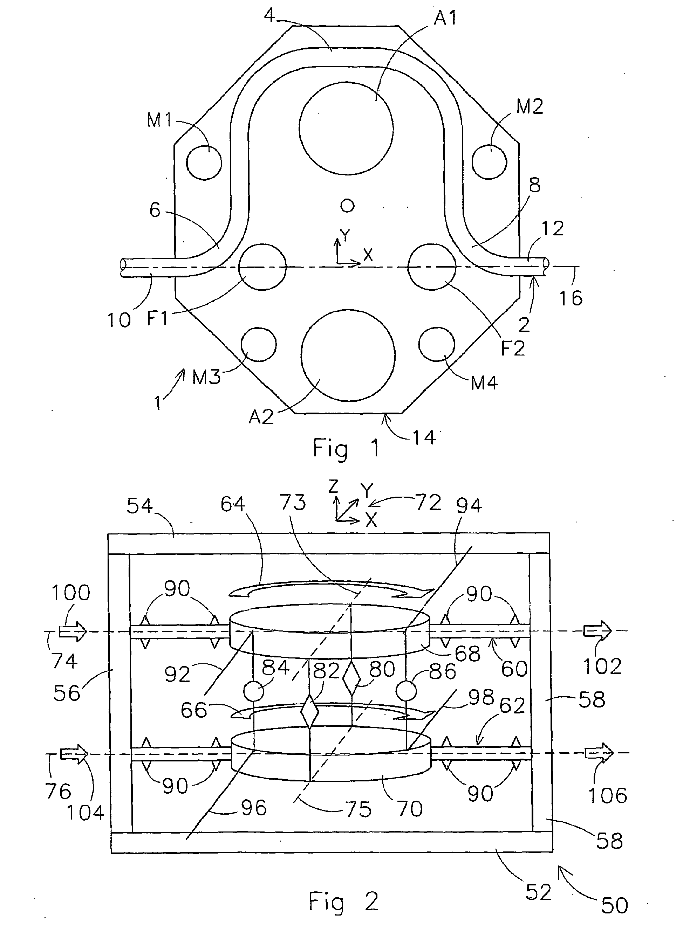

A first embodiment of the apparatus 1 for measuring properties of a fluid according to the invention comprises a flow tube 2 provided with a curved portion 4. The curved portion 4 is approximately U-shaped. In one embodiment (not shown), the curved portion can comprise a plurality of U-shaped parts, for example a plurality of interconnecting semicircles. The curved part 4 is connected via two bend pieces 6, 8 to straight parts 10, 12, extending further laterally of Fig. 1, of the flow tube 2.

As is shown, the bend pieces 6, 8 are continuous bends. The flow tube 2 comprising the curved portion 4 is preferably made in one piece.

In one embodiment (not shown), the bend pieces 6, 8 are screwed connections, the straight parts 10, 12 being screwed into the bend pieces 6, 8. In another embodiment (not shown), the curved portion is a curved channel attached in a casting, the straight parts of the flow tube being fitted in the casting by, for example, screwing, welding or soldering.

The curved portion is provided with stiffening means to reduce internal deformations of the curved portion. In the embodiment shown, the stiffening means comprise an approximately disc-shaped, octagonal casting 14. The disc-shaped casting can also be round, triangular, square, pentagonal, hexagonal, etc.

A system comprising an x-axis, a y-axis and a z-axis is defined. The centre line 16 of the straight parts 10, 12 of the flow tube 2 extends substantially along the x-axis. The y-axis is perpendicular to the x-axis and when the apparatus 1 is at rest, the casting 14 is located in the plane of the x-axis and the y-axis. The origin of the system is located in proximity to the centre of the casting 14. The z-axis extends perpendicularly to the x-axis and the y-axis, from the plane of the drawing.

Coupled to the monolithic casting are, for example: actuators A1 and A2 on the y-axis, on opposing sides of the x-axis; stiff piezo force sensors F1, F2 on the x-axis, at approximately symmetrically opposing positions about the y-axis; and/or additional weights M1, M2, M3, M4 for adjusting the mass balance of the curved portion 4 and the stiffening means 14.

The casting 14 is, for example, a monolithic casting provided with a curve in which the curved portion 4 of the flow tube 2 is attached. The curve is, for example, covered by a monolithic cover provided with a corresponding curve which holds the curved portion 4 in the correct position and ensures additional stiffening.

In the embodiment shown in Fig. 1 with two actuators A1 and A2, the centre of gravity ZW of the curved portion and the casting 14 is positioned in any desired location, for example in the region of the origin of the x-axis and y-axis system.

In a further embodiment (not shown in Fig. 1) comprising just one actuator A1, the centre of gravity ZW is at a position:

$$Y(zw) = J0 / (M0 \times Y(A1))$$

wherein J0 is the moment of inertia for rotation about the x-axis, M0 is the mass of the system including a calibration substance, such as water, and Y(A1) is the position of the actuator A1 on the y-axis.

Connected to the stiffening means 14 are one or more weights, for example four weights M1, M2, M3 and M4 which are attached around the origin.

In an embodiment shown in Fig. 2, the apparatus 50 comprises a frame comprising joists 52, 54 which are bound by flanges 56, 58 at lateral edges. The frame is robust and stiff. Two approximately parallel flow tubes 60, 62, which are provided with schematically indicated curved portions 64, 66, are attached within the frame. The curved portions 64, 66 are provided with stiffening means comprising discs 68, 70 respectively.

A system 72 comprising an x-axis, a y-axis and a z-axis is defined. The centre lines 74, 76 of straight parts of the flow tubes 60, 62 respectively extend substantially parallel to the x-axis. The y-axis is perpendicular to the x-axis and when the apparatus 50 is at rest, the discs 68, 70 are parallel to the plane of the x-axis and the y-axis. The centre lines 73, 75 of the discs 68, 70 respectively extend approximately parallel to the y-axis. The z-axis extends perpendicularly to the x-axis and the y-axis.

Actuators 80 (A1) and 82 (A2) are attached between the discs 68, 70 and on either side of the centre lines 74, 76. Force sensors 84 (Fl), 86 (Fr) are attached between the discs, on either side of the centre lines 73, 75.

Optionally, the straight feed and discharge parts of the flow tubes are provided, on either side of the discs 68, 70, with flexural means 90 comprising, for example, a bellows or ribs. The flexural, means improve the flexibility of the flow tubes 60, 62, whereas the torsional stiffness of the flow tubes is maintained as much as possible, i.e. the flow tubes remain relatively stiff.

Restriction means, comprising for example sprits 92, 94, 96, 98, are attached between the discs and the environment, i.e. the frame. The sprits are connected to the discs roughly about an axis of rotation of the activated apparatus, for example at the points where the force sensors connect to the discs. The sprits restrict the possible movement of the connections toward directions in which the Coriolis force is active. The sprits 92 - 98 resist compressive and tensile forces but are nevertheless flexible, so movement transversely to their longitudinal direction is not or is hardly restricted. The sprits are elongated and flexible.

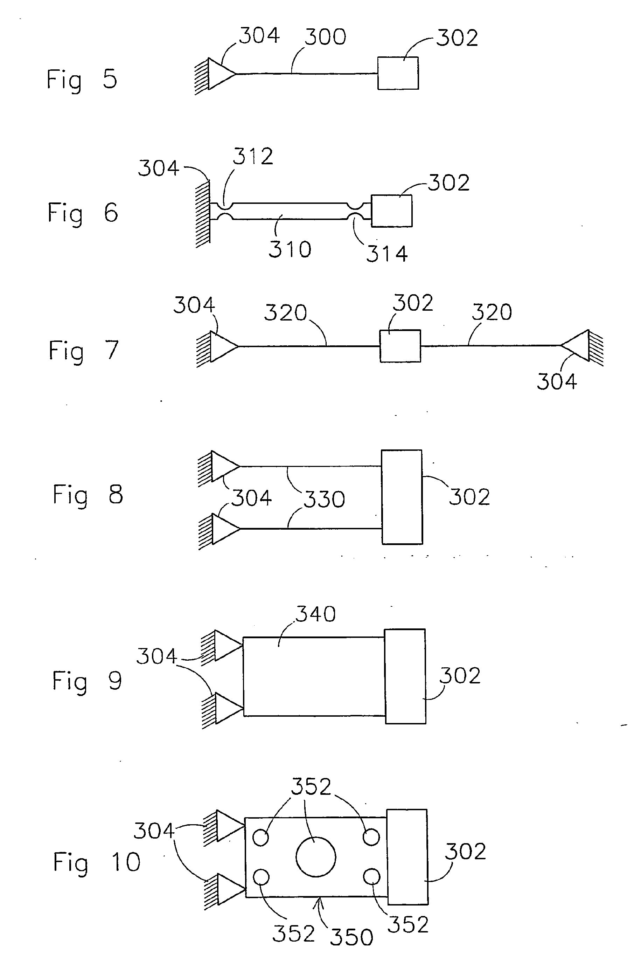

Suitable materials for the sprits include metals and metal alloys. For resisting tensile force, polymers such as aramids, fibre-reinforced plastics materials and the like are suitable. Further examples of sprits are shown in Figures 5 -10, a description of which follows.

Arrows 100, 102, 104, 106 and the curved parts 64, 66, which are represented schematically in arrow form, indicate the direction in which the fluid flows during use of the apparatus 50.

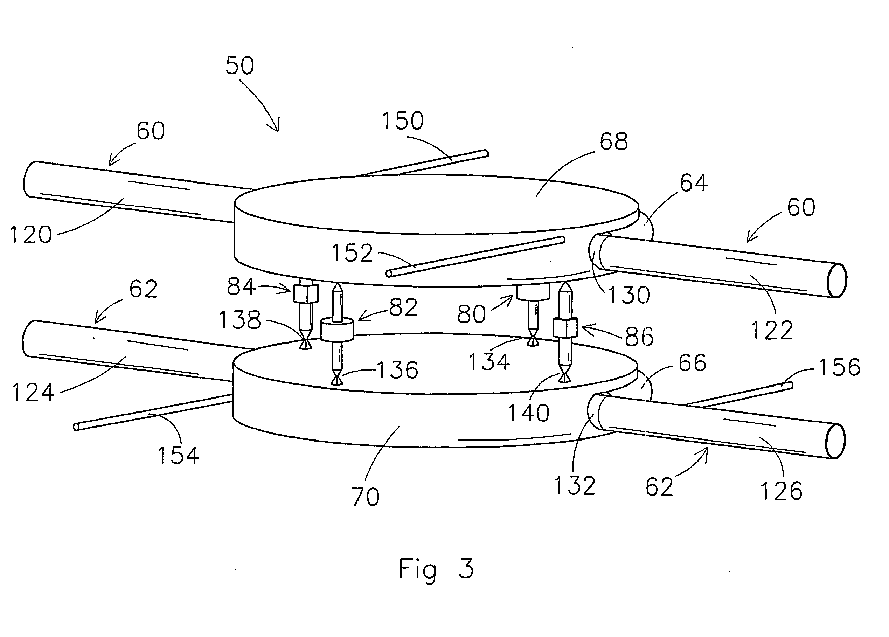

Fig. 3 is a perspective view of a portion of the apparatus 50 in simplified form. Identical parts are provided with the same reference numerals as in Fig. 2.

As is clearly shown, the flow tubes 60, 62 comprise straight parts 120, 122, 124, 126. The straight parts have relatively high torsional stiffness compared to flow tubes of known flowmeters as described in the introductory part. The curved parts 64, 66 are attached between the straight parts. The straight parts and the curved parts interconnect at connections 130, 132.

The curved parts, straight parts and connections can be formed monolithically, from a single piece, by casting, bending and the like. However, the connections 130, 132 can have any suitable shape.

The actuators 80, 82 and the force sensors 84, 86 are shown schematically. Contacts 134, 136, 138, 140 between the actuators or the sensors and the disc 70 positioned therebelow are as small as possible. The force sensors are modelled as stiff columns which are fastened to rotatable contacts on the discs to allow unimpeded rotation in the x-direction and y-direction about the contacts.

The sprits 150, 152 and 154, 156 are connected at one end to the discs 68 and 70 respectively. At an opposing end (not shown), the sprits are connected to a part which is fixedly connected to the environment, such as the frame (see Fig. 2).

If the viewing side in Fig. 3 is defined as the front and the non-viewing side as the back of the apparatus 50, possible configurations of the sprits are clear. In Fig. 2, the sprits 92, 96 are connected to the front and the sprits 94, 98 to the back of the apparatus. In Fig. 3, the sprits 152, 154 are connected to the front and the sprits 150, 156 to the back. Depending on the material of the sprits and a further design (not shown) of the apparatus, the sprits can be attached in any desired manner. If aramids are used, the sprits are, for example, connected both to the front and to the back of the apparatus 50.

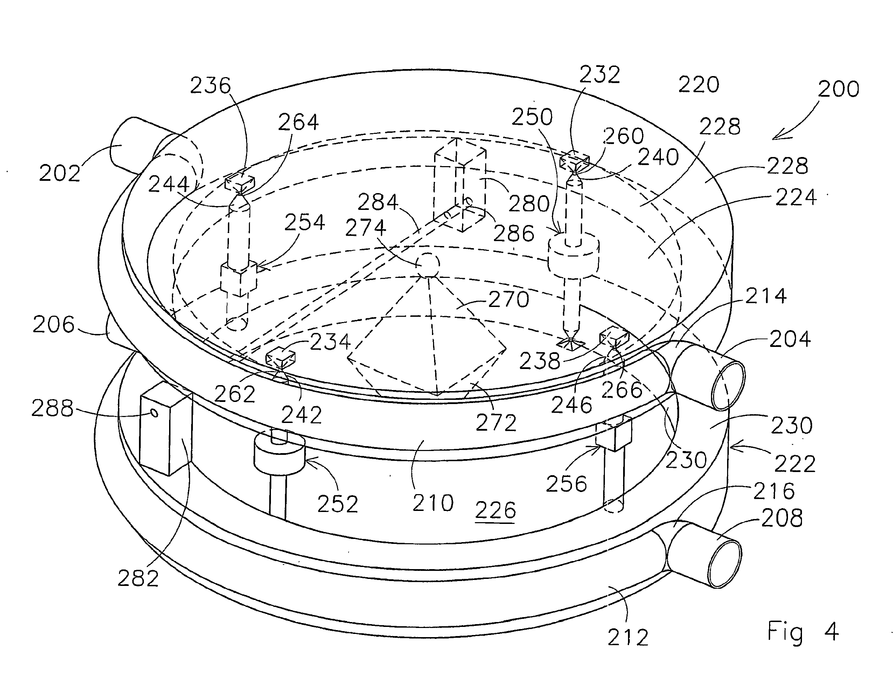

In an alternative embodiment shown in Fig. 4, the isolation from the environment is extended. An apparatus 200 according to the invention comprises flow tubes having straight parts 202, 204, 206, 208 which connect to curved parts 210, 212. The connections 214, 216 between the straight parts and the curved parts are thus formed from one piece. The connections ensure a seamless transition from the straight to the curved parts.

In the embodiment shown, the curved parts 210, 212 form a semicircle, although they may have any desired shape in which a part of the flow tube is located eccentrically to the axis of rotation.

The curved parts are stiffened by stiffening means which, in the embodiment shown, comprise discs 220, 222. The discs have circular plates 224, 226 which are provided at the edges with encircling, raised flanges 228, 230. Although not shown, the discs between the flanges can be provided with further stiffening means in the form of, for example, ribs, walls, triangular structures and the like. The discs should be sufficiently stiff to comply with the specifications set out hereinafter but are nevertheless light, and this improves the sensitivity of the apparatus.

Attached roughly in the centre, between the discs 224, 226, is a stiff fixing body 270, 272 which connects the discs and makes contact with the discs at two pivot points 274 at a centre of rotation of the discs. The fixing body can have any desired shape.

A beam 280 extending in the direction of the flange 230 is attached to the flange 228. A beam 282 extending in the direction of the flange 228 is attached to the flange 230, on an opposing side of the apparatus 200. The ends of the beams 280 and 282 are joined together by a sprit 284. The sprit 284 is connected to the beams by means of mortise and tenon joints 286, 288.

Fig. 5 shows an example of a sprit 300 for use in, for example, the apparatus 50 (Fig. 3) or 200 (Fig. 4). The purpose of the sprit 300 is to restrict one degree of freedom and to allow all other degrees of freedom. For this purpose, the sprit is connected at one end to the (schematically represented) apparatus 302 and at the other end to an earthing 304, for example via the frame 52 - 58 in Fig. 2.

Fig. 6 shows an example of a sprit configured as a rod 310 which is flexurally stiff and is provided at opposing ends with narrowings 312, 314. The narrowings are such as to impart the above-mentioned purpose to the sprit, i.e. the narrowings resist pressure and traction but do not restrict or hardly restrict bending.

Fig. 7 is an embodiment in which the apparatus 302 is connected on opposing sides to the earthings 304 via sprits comprising snares 320. The snares 320 comprise relatively thin, flexible cords, wires or the like having high tensile strength.

Fig. 8 shows the apparatus 302 which is connected to the earthing 304 via two sprits 330, 332. The sprits resist, for example, pressure and/or traction. The sprits thus restrict linear movement of the apparatus 302 from and/or to the earthing 304. The fact that two sprits are attached next to each other also prevents rotation of the apparatus about an axis perpendicular to the plane of the drawing.

Fig. 9 shows the apparatus 302 which is connected to the earthing 304 via a sprit configured as a hinge or a leaf spring 340. The leaf spring 340 restricts linear movement of the apparatus 302 from and to the earthing 304. Rotation of the apparatus about an axis perpendicular to the plane of the drawing is also prevented. The resilient hinge thus performs the function of two sprits, as shown in Fig. 9.

Fig. 10 shows another embodiment of a hinge or leaf spring 350 in which there are formed one or more holes 352, the cross sections of which may vary. The holes or openings 352 allow local properties of the leaf spring 350 to be adjusted.

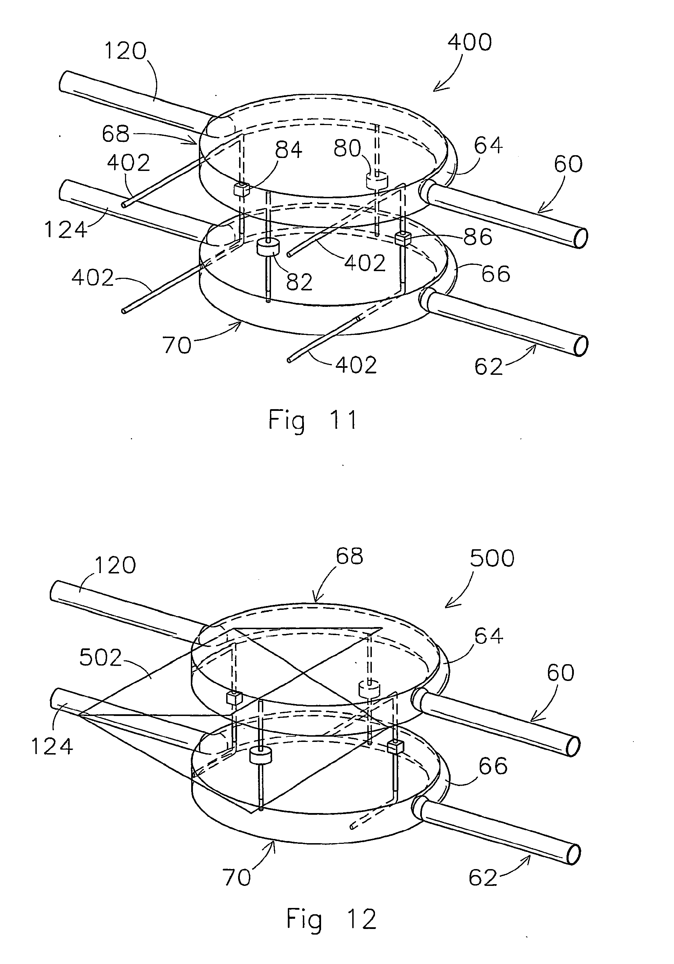

Fig. 11 shows an embodiment of the apparatus 400 according to the present invention. Parts corresponding to the apparatus 50 are numbered the same. The discs 68, 70 are each connected to an earthing (not shown in greater detail) via sprits 402. The sprits have, for example, one of the embodiments shown in Fig. 5-10. The sprits 402 are attached in accordance with the configuration shown in Fig. 8. The sprits 402 are connected to the discs 68, 70 roughly at the locations where the sensors 84, 86 make contact therewith.

Fig. 12 shows an embodiment of the apparatus 500 according to the present invention. Parts corresponding to the apparatus 50 are numbered the same. The discs 68, 70 are joined together via a folded leaf spring 502.

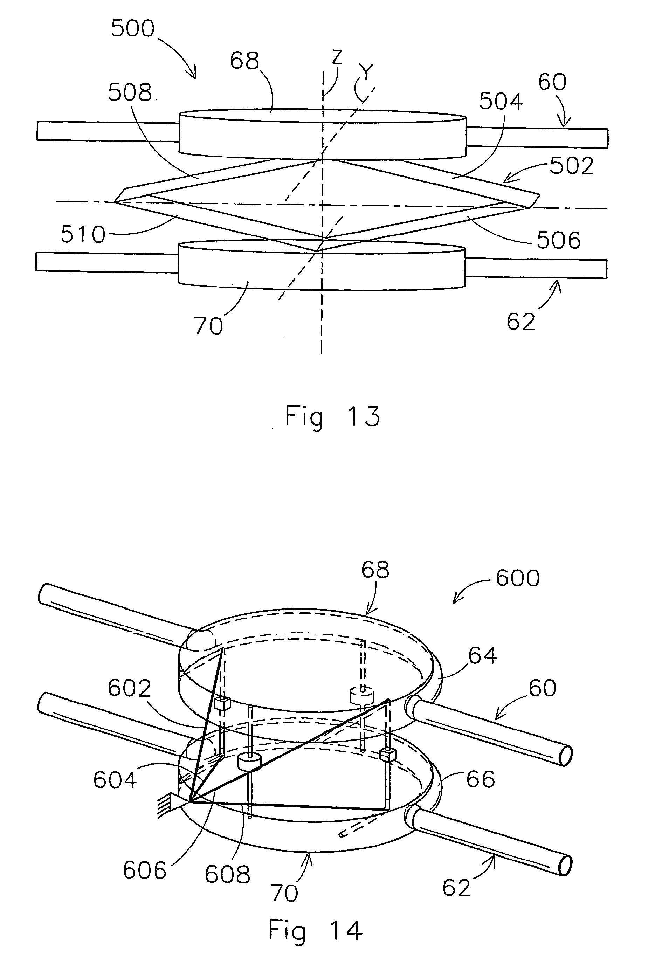

As is shown more clearly in Fig. 13, the leaf spring 502 comprises, for example, four parts 504, 506, 508, 510 which are joined together in a hinging manner. The parts joined together in a hinging manner are, for example, formed by folding a one-piece leaf spring into four parts. The parts 504, 508 are connected to the disc 68 approximately parallel to the y-axis. The parts 506, 510 are connected to the disc 70 approximately parallel to the y-axis. Holes are formed in the parts of the leaf spring 502 for feeding through the actuators and the sensors.

Fig. 14 shows an embodiment of the apparatus 600 according to the present invention. Parts corresponding to the apparatus 50 are numbered the same. The discs 68, 70 are sprits 602, 604, 606, 608 connected to an earthing 610. The sprits have, for example, one of the embodiments shown in Fig. 5-10. The connection to the earthing 610 is preferably a soft connection comprising, for example, an elastic or rubber. In other words, the connection restricts substantially just movement of the sprits in the longitudinal direction thereof. The contact points of the sprits are located on the mutually facing insides of the discs 68, 70.

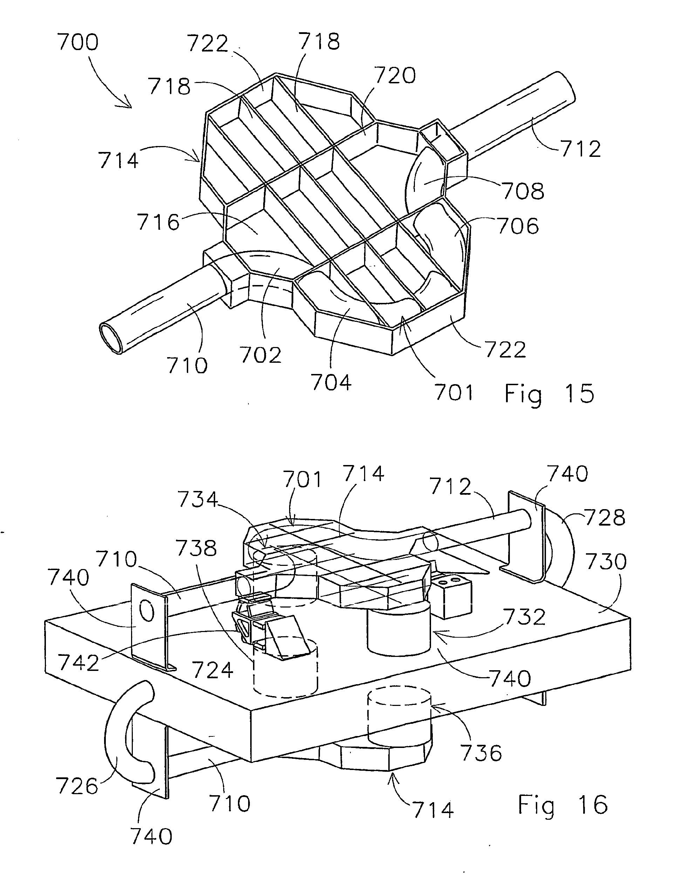

Fig. 15 shows a flow tube 700 comprising a supply tube 710, discharge tube 712 and curved portion 701. The curved part comprises four curved, interconnecting tube parts 702, 704, 706, 708 having a bending radius R.

The curved part is strengthened by the stiffening means 714 which are shown partially exploded. The stiffening means 714 comprise a plate 716 provided with raised ribs 718, 720 in the direction of the y-axis and the x-axis respectively. The outside of the plate 716 is also provided with a raised, encircling wall 722 which roughly follows the outside of the curved portion 701, or else the curved portion 701 roughly follows the inside of the raised wall 722. In practice, the construction 714 is provided with a cover plate (not shown) to provide a closed construction which is even stiffer. The stiffening means 714 can also have forms different to that shown in Fig. 15, within the principle of a closed box provided with internal ribs. The closed box combines high stiffness with relatively low weight and moment of inertia.

The tube 710, 712 has, for example, an external diameter of approximately 16 mm and an internal diameter of approximately 14 mm. R is, for example, approximately 32 mm. The plate 716 is, for example, made of steel having a thickness of approximately 1 mm. The plate and the raised strengthening ribs are welded to the flow tube.

At their ends, the tube parts 710, 712 (each having a length of approx. 100 mm) are rigidly connected to the fixed environment (for example, a frame having a relatively heavy mass) and act as torsional springs during use. The torsional stiffness of the tube parts, in combination with the mass inertia of the measuring tube and the frame, provides a rotational natural frequency of approx. 250 Hz. Rotation is carried out about the centre line of the tube. This will also be the excitation frequency of the measuring tube.

Figure 16 shows how two measuring tubes 700 are attached to opposing sides of a frame 730. The frame 730 is, for example, in the form of a relatively thick plate. Four actuators 732, 734, 736, 738 are attached between the respective strengthening means 714 and the frame. For each flow tube, the two actuators move in antiphase. Each measuring tube will rotate roughly about the centre lines.

Not shown in the figure are accelerometers which are mounted on the measuring tube at the level of the actuator. The accelerometers measure the rotational acceleration in order thus to determine the rotational speed by means of integration.

The mass flowmeter as a whole comprises two identical measuring tubes which are each connected to the frame 730 in the same way. Overall, this results in four actuators, four resilient hinges including four force sensors and two accelerometers. The two measuring tubes are connected in series via an intermediate tube 724 which is connected at its ends to curved tubes 726, 728. The intermediate tube 724 extends through the frame 730 and is not shown in greater detail. The fluid thus flows in both measuring tubes in the same direction and at the same speed.

The ends of the respective tube parts are fixed in a torsionally stiff manner by fixedly welding around the end of the tube in a flat plate 740. The flat plate 740 is secured to the frame 730. The respective ends are in this way fixed in the radial direction (i.e. vertically along the z-axis and horizontally along the y-axis, in the plane of the frame) and are thus unable to rotate. It is quite possible for the ends of the tubes still to expand in the axial direction (along the x-axis).

Resilient hinges 742 are attached between the measuring tube and the frame on either side of the curved portion. The common aim of the resilient hinges is to allow rotational freedom of the measuring tube about the centre line of the straight tube parts and thus to define other degrees of freedom. The mechanism certainly still allows vertical freedom in the direction of the z-axis. Mounting on the force sensor eliminates this freedom of movement too.

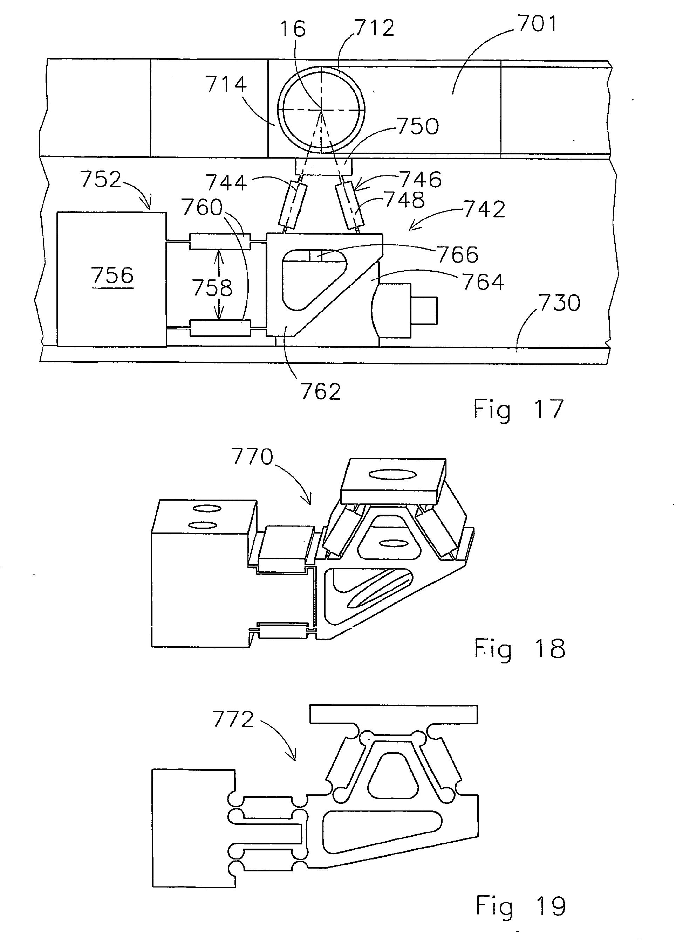

Figure 17 is a schematic side view in cross section of the measuring tube 712 comprising the strengthening body 714 and the resilient hinge mechanism 742. The mechanism comprises two parts, namely the rotary hinge and the guide for guiding in the z-direction.

The rotary hinge 744 comprises two leaf springs 746 which have a stiffened central part 748 and are attached at an angle relative to each other. The angle is such that the intersection of the centre lines through the two leaf springs coincides with the centre line 16 through the measuring tube. A virtual pivot point is thus created on the centre line of the measuring tube. The measuring tube is mounted with the strengthening means 714 on the block 750 of the rotary hinge 744. The measuring tube is mounted on either side of the curved part 701. Although the virtual axis of rotation can be displaced during turning, the displacement which occurs is negligible at the relatively very small rotational angles of the measuring tube (< 4 mrad). The rotational stiffness of the resilient hinge is very low (approximately 50 Nm/rad), and this is much lower than the total torsional stiffness of the two ends of the tube (approximately 4,000 Nm/rad). The stiffness of the rotary hinge in the x-, y- and z-directions is high enough in order to fasten the virtual axis of rotation in a sufficiently rigid manner to the z-guide 752 which forms a connection between the rotary hinge and the frame 730.

The purpose of the z-guide 752 is to transfer the forces (Coriolis and acceleration forces) to the force sensor 764 in a defined manner from the measuring tube and via the rotary hinge. The force sensor 764, which is attached to the intermediate body 730, serves merely to absorb the forces in the z-direction. Lateral forces, like couples, should as far as possible be diverted outside the force sensor in order to measure the force in the z-direction more accurately.

As shown in Figure 17, the fixed part 756 of the z-guide is fixedly mounted on the frame 730 positioned therebelow. A relatively small flexible body 762 is connected to the fixed body 756 via two leaf springs 758 having a stiffened central part 760. The vertical stiffness of the z-guide is therefore much (for example, 10 to 100 times) lower than the stiffness of the force sensor 764.

A vertical force from the measuring tube is transferred to the force sensor 764 via the rotary hinge, the flexible body and a sprit 766. The z-guide is much stiffer in the x-direction and the y-direction than in the z-direction. Because the sprit 766 between the flexible body and force sensor can transfer forces only in the z-direction, all forces which are not in line with the centre line of the sprit will be diverted via the leaf springs of the z-guide 752.

Figure 18 shows a variation, produced by means of wire EDM, of a resilient hinge 770.

Figure 19 shows a variation, produced by means of laser cutting, of a resilient hinge 772.

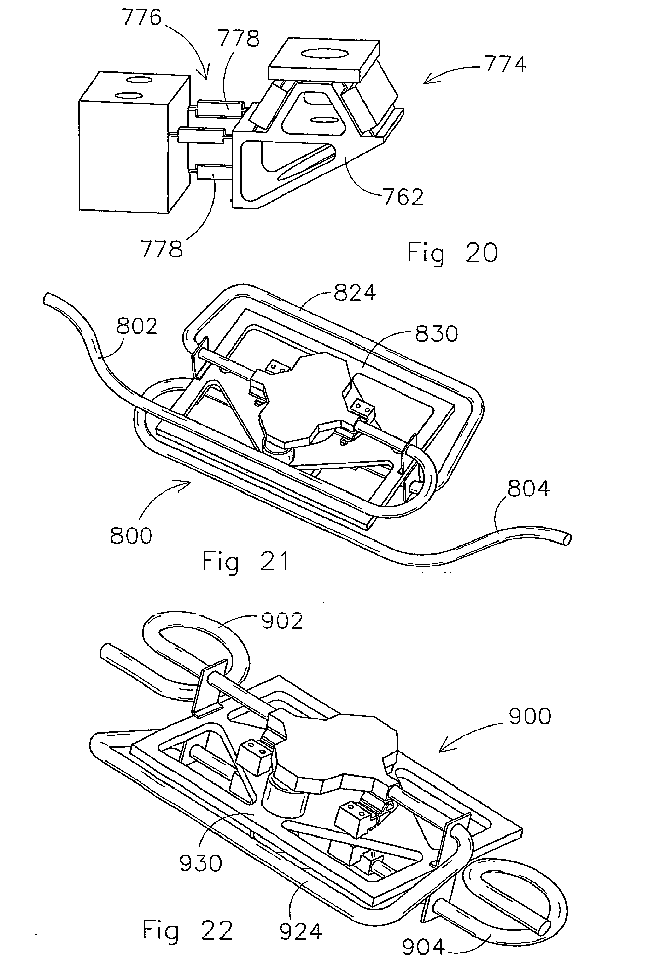

The measuring tube is mounted, on either side of the curved part, on two resilient hinges, as described hereinbefore. If a heated or hot liquid is flowing in the measuring tube, it is possible that the measuring tube will expand non-uniformly (non-uniform heating) relative to the frame. In order to prevent tensions from being produced, the second (in the direction of flow) resilient hinge is configured differently from the above-described mechanism (see Figure 20).

Instead of two stiffened leaf springs, the z-guide 776, before the second hinge 774, comprises, for example, three or four stiffened wire springs (sprits) 778. The z-guide thus also has freedom of movement in the axial direction of the tube (x-direction) while the high stiffness in the y-direction remains almost constant. Because a sprit will be arranged in this case too between the flexible body 762 and the force sensor (not shown), the measuring tube is able to move (expand) in the axial direction at the site of the hinge 774 without lateral forces thereby being exerted on the force sensor.

The above-described components are connected to the frame or intermediate body. The mass of the intermediate body should typically be at least 10 times greater than the mass of the strengthened measuring tube.

In order to minimise the sensitivity of the mass flowmeter to ambient vibrations, the two measuring tubes, which are connected in series with each other, can as a whole be suspended at low frequency from a housing (not shown) which is still located around the assembly as a whole. Producing the connections (supply tubes) between the housing and measuring body is problematic in this regard. The connection has to have relatively low stiffness in all degrees of freedom, so the highest natural frequency of the measuring body with respect to the housing is approximately 10 times lower than the excitation frequency of the measuring tubes.

When used on ships, all of the components through which the liquid to be measured flows can, in conjunction with fire safety, be made, for example, of RVS-316. Furthermore, flexible materials such as rubber, Teflon, etc. are preferably not used. In addition, flexible, ribbed tube elements made of rubber-like material ("concertina") are unsuitable as a result of the dead volumes in these elements in which liquid (such as fuel) can be left.

Figures 21 and 22 show two embodiments 800 and 900 respectively, using supply tubes 802, 804, 902, 904 which are curved so as to form a relatively flexible connection between the measuring body and housing (not shown). The pipes can thus be made of stainless steel and there is no need to use bellows and the like.

A more compact solution (not shown) is the use of membrane elements. These membrane elements are much shorter than the tubes shown in Fig. 21 and 22. The membrane elements have a stepped course.

Figures 21 and 22 also show that the frame 830, 930 is not solid but rather tapered in order to restrict the total mass of the sensor. A target weight is lower than 10 kg. However, it is certainly possible to achieve the desired mass ratio between the measuring tubes and intermediate body (> a factor of 10).

Another adaptation of the subject-matter is the return pipe between the upper and lower measuring tubes. In the foregoing description (Figure 16), the return pipe 724 is integrated in the intermediate body 730. This has the advantage that the length of the pipe remains minimal (having the advantage of less lost pressure). However, the integration can lead to the intermediate body, and thus the sensors and actuators attached thereto, taking on the temperature of the liquid to be measured. As the temperature can be high (for example, up to 160 °C), this can be disadvantageous for electronic components. In the embodiment of Figures 21 and 22, the return pipe 824, 924 is rerouted around the outside of the intermediate body 830, 930 in order to restrict heating of the intermediate body.

Mode of operation

In an apparatus comprising a single flow tube, as shown in Fig. 1, and a single actuator A1, a calibration is carried out using a calibration substance such as water. If a fluid other than the calibration substance is located in the flow tube 2, the force sensors F1, F2 will measure a component in (anti)phase with the actuator A1. The measured component in (anti)phase is a measure of the density of the respective fluid.

The weights M1, M2, M3 and M4 are adjusted in such a way that at a standard density, i.e. the density of the calibration substance, no force is measured. If the measured force is in phase, then M1, M2 are reduced and/or M3, M4 increased. If the measured force is in antiphase with the actuator, then M1, M2 are increased and/or M3, M4 reduced. Accordingly, instead of the mass, the position of one or more of the weights M1 - M4 can be adapted.

In another embodiment, the apparatus according to the invention comprises at least two actuators A1 and A2 (Fig. 1). The position of the centre of gravity ZW is in this case less important. A force exerted by the actuators is balanced. Actuator A1 has a fixed amplitude, actuator A2 is activated in antiphase with respect to A1. If the force sensors F1, F2 measure a component in phase or antiphase with A1, the amplitude of A2 is adjusted up or down. The adjustment is carried out such that the sum of the (anti)phase components of the force sensors F1 and F2 is minimised.

The ratio of the capacities and/or the amplitudes of the activation signals of the two actuators A1 and A2 is a measure of the density of the fluid flowing through the flow tubes.

Unless a fluid flows through the flow tube 2, there is no force component which is +/- 90 degrees out of phase with the activation signal of the actuators A1, A2. The sensors F1, F2 therefore do not have to issue a signal. Tuning can be achieved by adapting the position on the x-axis of the actuators A1, A2. Electronic calibration of the sensors is, however, preferable.

The force exerted by the actuator(s) is balanced to ensure that the curved proportions or the discs are rotated precisely in the centre line of the straight parts of the flow tubes. This can be regulated by, for example, controlling one of the two actuators A1, A2.

The actuators A1, A2 are, for example, driven with a sinusoidal signal.

The sensors F1, F2 measure, for example, a signal comprising a component in phase/antiphase with the activation signal of the actuators (the sine component) and/or a component which is 90 degrees out of phases therewith (the cosine component).

The sine component indicates a force applied to the force sensors in the direction of the degree of freedom of the actuator, i.e. perpendicular to the plane of the drawing of Fig. 1. Depending on the sign of the measured signal, the axis of rotation is located above or below the centre line 16. The sum of the sine components, divided by the amplitude (linear) and the frequency (square) of the vibration produced in the square, is a measure of the density of the fluid.

If the signals measured by the sensors F1, F2 are +/- 90 degrees out of phase with the activation signal of the actuator(s) A1, A2, then the measured signals are the Coriolis forces. In other words, this is a square component. The difference between the cosine components that is measured by both the sensors, divided by the amplitude (linear) and the frequency (linear) of the vibration produced, is a measure of the mass flow of the fluid through the flow tube.

If no liquid is flowing through the flow tube, the difference between the forces, measured by the force sensors, as a square component must be zero.

Phase information is extracted from the signals measured by the force sensors with the aid of phase-sensitive detection. The detection includes, for example, a method utilising a phase-locked loop or via spectral analysis with the aid of Fourier analysis. The Fourier analysis provides the amplitude and phase of the measured force.

The angular velocity of the curved part of the flow tube is, for example, measured with accuracy of 0.1 %. This is possible by measuring the counteracting electromagnetic force of the electromagnetic coil of one or more of the actuators A1, A2.

The actuators A1, A2 are, for example, driven with a sinusoidal signal. The more intensively the actuators are driven, the greater the force signal measured by the sensors F1, F2 and thus the difference between the force signals. The difference between the force signals provides information concerning the Coriolis force. In other words, the more intensive the driving, the greater the dynamic range of the apparatus. The possible driving force of the electromagnetic coil of the voice coil actuators is thus a restriction.

In order to eliminate the influence of the driving, the Coriolis signal is divided (standardised) to the angular velocity of the disc or discs 14.

In the case of two or more flow tubes, the mode of operation is substantially the same as the mode of operation as described hereinbefore. The frame ensures a robust reference framework within which the apparatus measures the flow rate and/or density of a fluid. The actuators and the sensors are connected solely to the flow tubes. The apparatus is thus protected more effectively from vibrations from the outside.

The isolation from the environment is even more effective in the system shown in Fig. 4, in which sprits are attached solely between the discs, without being linked to the environment.

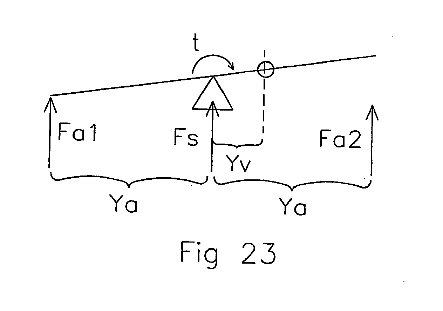

The foregoing will be illustrated with reference to Figures 23 and 24.

The fluid in the flow tube ensures that the mass centre of the measuring body (i.e. the flow tube comprising stiffening means) does not coincide with the axis of rotation on which the force sensors are also positioned. The consequence is that there acts on the axis of rotation, and thus on the force sensors, a force which is in phase with the forces exerted by the actuators and which is dependent on the density of the fluid in the flow tube.

By adjusting the force exerted by the first and second actuators (i.e. allowing the force to increase or decrease), it is possible roughly to nullify the resulting force on the axis of rotation. The term resulting force refers to the added-up force measured by the force sensors. The value with which the force exerted by both actuators has to be adjusted is a measure of the density of the fluid through the flow tube.

Figure 23 shows the following components:

Fa1 = 1st actuator;
Fa2 = 2nd actuator;
Ya = distance between the actuator and axis of rotation (in Fig. 23, Ya is the same for both actuators; this is not necessary);
Fs = force on the axis of rotation = total force on the force sensors;
Fs1 = force measured by 1st sensor;
Fs2 = force measured by 2nd sensor;
Yv = distance between the mass centre of the fluid and axis of rotation;
Tt = torque caused by the torsional stiffness of the flow tube.

An equilibrium of forces is:

$$Fa1 + Fa2 + Fs = Mfluid*a*Yv$$

An equilibrium of moments is:

$$Fa1*Ya - Fa2*Ya - kt*phi = (J0 + Jfluid)*a$$

wherein:

Mfluid = mass of fluid = density * volume of the flow tube;
a = rotational acceleration of the measuring body (actuated);
kt = torsional stiffness of the flow tube;
phi = angle of rotation of the flow tube;

J0 = moment of mass inertia of the empty flow tube;
Jfluid = moment of inertia of the fluid in the flow tube.

If Fa1 is adjusted by the value 0.5*delta and Fa2 is adjusted by the value 0.5*delta, then the foregoing equilibrium of forces remains valid if delta = Fs:

$$Fa1 + Fa2 + Fs = Mfluid*a*Yv$$

equals with the adjusted actuator forces:

$$(Fa1 + Fs/2) + (Fa2 + Fs/2) = Mfluid*a*Yv$$

therefore:

Fa1 equals Fa1 + Fs/2; and
Fa2 equals Fa2 + Fs/2.

As a result of the adapting of the actuator forces, the equilibrium is maintained. The force measured by the force sensors (i.e. the force acting on the axis of rotation) is accordingly equal to 0. The resulting force Fs on the force sensor is equal to 0. The equilibrium of moments remains unaltered.

The mass flowmeter can, for example, be calibrated as follows (this applies to the case in which Fa1 and Fa2 are 90 degrees out of phase with Fs1 and Fs2): ensure that the forces exerted by both actuators are 180 degrees out of phase with each other (i.e. one is oriented upward and the other downward); set the mass flow through the flow tube to zero (i.e. the fluid is not flowing). The added-up force measured by the sensors Fs = (Fs1 + Fs2) should then be equal to 0. If this is not the case, Fa1 and Fa2 can be adapted as described hereinbefore.

Practical embodiment

A practical embodiment of the apparatus according to the invention is suitable for measuring a mass flow and/or the density of a fluid flowing through the flow tube.

The mass flow is to be measured within a range of, for example, 0 - 1 kg/s with accuracy of better than 0.2 %.

The density is, for example, to be measured within a range of 0 - 3,000 kg/m$^3$. The accuracy is better than 1 % for a density of greater than 500 kg/m$^3$. It is, however, possible to scale the apparatus to a larger or smaller measuring range.

The apparatus according to the invention is insensitive to external vibrations up to, for example, 0.7 g at 1 mm amplitude. Vibrations of this type are, for example, within a frequency range of 1 - 100 Hz.

Suitable components include, for example:

- an accelerometer for measuring ambient vibrations of approximately 500 m/s$^2$, such as Brüel & Kjær 4507-B-004/005;

- force sensors which can measure forces of approximately 10 N with resolution of 1 mN, sensitivity of 110 mV/N, stiffness of approximately 2 kN/$\mu$m, such as Brüel & Kjær 8230;

- actuators which can provide a force of approximately 10 N at a frequency of 160 Hz, with a stroke of approximately 0.5 mm, speed of +/- 0.5 m/s and acceleration of +/- 500 m/s, such as Geeplus VM4032.

The spring constant of 120 N/mm of a practical system is, depending on the density of a fluid in the flow tube, selected such that the resonance frequency in a fluid having a density of 1,000 kg/m$^3$ is approximately 1,000 rad/s (159 Hz). The damping is approximately 10 Ns/m.

Activation of the apparatus both in resonance and out of resonance has advantages. Activation in resonance reduces power consumption. Activation out of resonance prevents beats, the excitation of parasitic modes of vibration and the like. The torsional stiffness of the flow tubes is, for example, selected in order to adjust a natural frequency thereof to approximately 200 Hz. If, however, the apparatus is activated out of resonance, it is preferable to make the natural frequency of the flow tubes much greater than 200 Hz by adapting the torsional stiffness thereof accordingly.

The apparatus provided with the above-mentioned components has sensors which are stiff compared to the actuators. In use, the actuators provide, for example, a force of approximately 10 N and a maximum deflection of 0.5 mm. The sensors having stiffness of 2 kN/μm have a deflection of approximately 10 nm or less. The force sensors therefore have a deflection which is much less than the deflection of the actuators, i.e. less by a factor of at least 10,000 to 50,000.

An above-described practical system has been tested with and been found to be suitable for various fluids such as air at 0 - 20 bar, petrol, ethanol, diesel, water, liquid and gaseous SF6 at 0 - 22 bar, and sulphuric acid. The densities of the aforementioned substances vary from 0-20, 720, 800, 950, 1,000 to 1,800 kg/m$^3$ respectively.

The embodiment of the mass flowmeter according to the present invention has, for example, the following features:

- One degree of freedom (namely, rotation about the x-axis) is allowed by the measuring body (i.e. the flow tube comprising stiffening means) and activated by 1 or 2 actuators (per measuring body). The activated degree of freedom is necessary for generating the Coriolis force.

- A second and a third degree of freedom (namely, rotation about the y-axis and translation along the z-axis) are allowed by the measuring body. The generated Coriolis forces act in the direction of these degrees of freedom. The force sensors are positioned in such a way that the generated Coriolis forces are guided via these second and third degrees of freedom to the force sensors, where they are measured.

- The use of piezo force sensors having very high stiffness (> 1 kN/μm) eliminates movements in the direction of the second and third degrees of freedom. Displacements are, for example, at least 500 x smaller than the deflection caused by the actuators. It is thus possible to measure the Coriolis forces which are produced with minimal disturbance by parasitic forces which can occur if the measuring body was able to move in the direction of the second and third degrees of freedom. As a result of the fact that only forces, and not displacements, are measured, there is less sensitivity to temperature-dependent material properties such as the modulus of elasticity.

- The measuring body defines all other degrees of freedom in addition to the above-mentioned first, second and third degrees of freedom. This prevents movements of these other degrees of freedom from being able to disturb the degrees of freedom within which the Coriolis force operates.

- The defined degrees of freedom of the measuring body preferably have a natural frequency which is at least 10 x greater than the frequency at which the actuators operate.

- The internal natural frequencies of the measuring body should be at least two times greater (and preferably even more so, for example greater by a factor of 10 or more) than the excitation frequency. This prevents internal resonances from being able to disturb the measurement. The high internal natural frequencies are produced by attaching the stiffening means around the flow tube.

- In order to reduce the disturbing influence of vibrations from the outside world on the measurement, the measuring body is suspended loosely, with actuators and piezo sensors in all degrees of freedom, in relation to the outside world, i.e. at a natural frequency which is preferably lower than the excitation frequency of the measuring body by a factor of 5 or more. This can be achieved using flexible (supply) tubes as described hereinbefore (for example, the bellows in Fig. 2).

The stiffening body, which is attached to the outside, between or around the curved portion of the flow tube, and in which the stiffening ribs are accommodated, can have any desired shape. The shape is preferably selected such that the body is as stiff as possible (in order to increase internal resonance frequencies), in combination with a mass and moment of inertia which are as low as possible. The foregoing is intended to minimise the forces exerted by the actuators for the excitation of the flow tube.

As shown in Figures 5 to 14, the restriction means may be in various forms, such as sprits or leaf springs. A common feature is that they are resilient elements causing no parasitic effects, or at least as few parasitic effects as possible, such as friction, stick-slip and hysteresis, which can disturb the measurement of the Coriolis force.

The above-described embodiments utilise force sensors which are inherently very stiff, i.e. are hardly compressible. In this case, the flow tubes used have very high torsional stiffness.

The major advantages of the mass flowmeter over existing mass flowmeters according to the above-described principle include, for example:

1. The flowmeter is less sensitive to ambient vibrations, thus allowing it to be used on ships (marine diesels). Existing mass flowmeters or volume flowmeters have been found to be too inaccurate.

2. In addition, the present flowmeter is more accurate over a broader temperature range, and this is advantageous for use in marine diesels. This is achieved, inter alia, by measuring forces instead of displacements.

The above-described embodiments serve merely by way of example; a large number of modifications thereto are possible within the scope of the appended claims.

**Claims**

1. Apparatus for measuring properties of a fluid, comprising:

   - at least one flow tube (2), provided with a curved portion (4), for the conveying therethrough of the fluid;
   - at least one actuator (A1, A2), coupled to the curved portion (4) of the flow tube (2), for causing the curved portion to vibrate; and
   - at least two force sensors (F1, F2), coupled to opposing ends of the curved portion (4) of the flow tube (2), for measuring a force applied thereto through the flow tube;
   **characterized in that** the apparatus further comprises
   restriction means, coupled to the at least one flow tube (2), for restricting movement of the curved portion (4) thereof in the direction of one or more degrees of freedom.

2. Apparatus according to Claim 1, wherein the restriction means are elastically deformable.

3. Apparatus according to either Claim 1 or Claim 2,
   wherein an x-axis is a longitudinal direction of the flow tube, a y-axis extends perpendicularly to the x-axis in the plane of the curved portion of the flow tube, and a z-axis extends perpendicularly to the x-axis and to the y-axis; wherein the restriction means:

   - allow rotation about the x-axis, rotation about the y-axis, and translation along the z-axis; and
   - restrict movement in the direction of one or more of the remaining degrees of freedom.

4. Apparatus according to either Claim 1 or Claim 2, wherein the restriction means comprise one or more sprits which are connected at one end to the respective flow tube and at an opposing end to a strengthening frame attached around the flow tube.

5. Apparatus according to Claim 1 or Claim 2, wherein the restriction means comprise one of the following:

   - one or more leaf springs;
   - one or more hinges;
   - one or more rods.

6. Apparatus according to any one of the preceding claims comprising stiffening means (14) coupled to the outside of the curved portion (4) of the at least one flow tube (2).

7. Apparatus according to Claim 6, wherein the stiffening means comprise a disc member, the curved portion of the at least one flow tube substantially following the inside of the circumference of the disc member.

8. Apparatus according to either Claim 6 or Claim 7, wherein the stiffening means are provided with strengthening ribs.

9. Apparatus according to any of the preceding claims, wherein the at least one flow tube comprises:

   - a first flow tube (60) provided with a first curved portion (64); and
   - a second flow tube (62) which is attached parallel to the first flow tube and provided with a second curved portion (66), the at least one actuator comprising:
   - a first actuator (80) which is attached between the first curved portion (64) and an intermediate frame; and
   - a second actuator (82) which is attached between the intermediate frame and the second curved portion (66),

- two force sensors (84) being attached between opposing ends of the first curved portion of the intermediate frame, and
- two force sensors (86) being attached between the intermediate frame and opposing ends of the second curved portion.

10. Apparatus according to claims 6 and 9,
wherein the first actuator comprises two actuators which are attached between opposing ends of the stiffening means of the first curved portion and the intermediate frame, and wherein the second actuator comprises two actuators which are attached between the intermediate frame and opposing ends of the stiffening means of the second curved portion.

11. Apparatus according to Claim 9 or Claim 10, wherein the restriction means are attached between the first flow tube and the intermediate frame and/or between the intermediate frame and the second flow tube.

12. Apparatus according to any of the preceding claims, wherein the at least one flow tube is provided on either side of the curved portion with bellows means for making the respective flow tube flexurally slack and torsionally stiff.

13. Method for measuring properties of a fluid, including the following steps:

- conveying the fluid through at least one flow tube (2) provided with a curved portion (4);
- causing the curved portion (4) of the flow tube (2) to vibrate by activating at least one actuator (A1, A2) coupled thereto; and
- measuring a force using at least two force sensors (F1, F2) coupled to opposing ends of the curved portion (4) of the flow tube (2);
**characterized in that** the method further includes the following step:
- restricting, using restriction means coupled to the at least one flow tube (2), movement of the curved portion (4) thereof in the direction of one or more degrees of freedom.

14. Method according to Claim 13, wherein a vibration signal for causing the at least one actuator to vibrate is adapted, so an (anti)phase component of a force signal measured by the force sensors is minimised for measuring the density of the fluid.

15. Method according to Claim 13, including causing two actuators to vibrate using two respective vibration signals, wherein the ratio of the capacities of the two vibration signals is a measure of the imbalance corresponding to the density of the fluid.


**Patentansprüche**

1. Vorrichtung zum Messen von Eigenschaften eines Fluids, umfassend:

- mindestens ein Strömungsrohr (2), das mit einem gekrümmten Bereich versehen ist, zum Befördern des Fluids durch dieses;
- mindestens einen Aktuator (A1, A2), der an den gekrümmten Bereich (4) des Strömungsrohrs (2) gekoppelt ist, um den gekrümmten Bereich zum Vibrieren zu bringen; und
- mindestens zwei Kraftsensoren (F1, F2), die an gegenüberliegende Enden des gekrümmten Bereichs (4) des Strömungsrohrs (2) gekoppelt sind, um eine Kraft zu messen, die auf diese durch das Strömungsrohr aufgebracht wird;
**dadurch gekennzeichnet, dass** die Vorrichtung des Weiteren umfasst:

Einschränkmittel, die mit dem mindestens einen Strömungsrohr (2) gekoppelt sind, um eine Bewegung des gekrümmten Bereichs (4) dessen in Richtung eines oder mehrerer Freiheitsgrade einzuschränken.

2. Vorrichtung nach Anspruch 1, wobei die Einschränkmittel elastisch verformbar sind.

3. Vorrichtung nach Anspruch 1 oder 2, wobei eine x-Achse einer Längsrichtung des Strömungsrohrs entspricht, eine y-Achse sich senkrecht zu der x-Achse in der Ebene des gekrümmten Bereichs des Strömungsrohrs erstreckt, und eine z-Achse sich senkrecht zu der x-Achse und der y-Achse erstreckt;

wobei die Einschränkmittel:

- eine Rotation um die x-Achse, eine Rotation um die y-Achse und eine Translation entlang der z-Achse ermöglichen; und
- eine Bewegung in die Richtung von einem oder mehreren der verbleibenden Freiheitsgrade einschränken.

**4.** Vorrichtung nach Anspruch 1 oder 2, wobei die Einschränkmittel ein oder mehrere Halteelemente umfassen, die an einem Ende mit dem entsprechenden Strömungsrohr und an einem gegenüberliegenden Ende mit einem Verstärkungsrahmen verbunden sind, der um das Strömungsrohr angebracht ist.

**5.** Vorrichtung nach Anspruch 1 oder 2, wobei die Einschränkmittel eines der folgenden umfassen:

- eine oder mehrere Blattfedern;
- ein oder mehrere Gelenke;
- einen oder mehrere Stäbe.

**6.** Vorrichtung nach einem der vorstehenden Ansprüche, die Versteifungsmittel (14) umfasst, die an das äußere des gekrümmten Bereichs (4) des mindestens einen Strömungsrohrs (2) gekoppelt sind.

**7.** Vorrichtung nach Anspruch 6, wobei die Versteifungsmittel ein Scheibenelement umfassen, wobei der gekrümmte Bereich des mindestens einen Strömungsrohrs im Wesentlichen dem Inneren des Umfangs des Scheibenelements folgt.

**8.** Vorrichtung nach Anspruch 6 oder 7, wobei das Versteifungsmittel mit Verstärkungsrippen versehen ist.

**9.** Vorrichtung nach einem der vorstehenden Ansprüche, wobei das mindestens eine Strömungsrohr umfasst:

- ein erstes Strömungsrohr (60) das mit einem ersten gekrümmten Bereich (64) versehen ist; und
- ein zweites Strömungsrohr (62), welches parallel zu dem ersten Strömungsrohr angebracht ist und mit einem zweiten gekrümmten Bereich (66) versehen ist, und wobei der mindestens eine Aktuator umfasst:
- einen ersten Aktuator (80), welcher zwischen dem ersten gekrümmten Bereich (64) und einem Zwischenrahmen angebracht ist; und
- einen zweiten Aktuator (82), der zwischen dem Zwischenrahmen und dem zweiten gekrümmten Bereich (66) angebracht ist,
- zwei Kraftsensoren (84), die zwischen gegenüberliegenden Enden des ersten gekrümmten Bereichs (64) des Zwischenrahmens angebracht sind, und
- zwei Kraftsensoren (86), die zwischen dem Zwischenrahmen und den gegenüberliegenden Enden des zweiten gekrümmten Bereichs (66) angebracht sind.

**10.** Vorrichtung nach Anspruch 6 und 9, wobei der erste Aktuator zwei Aktuatoren umfasst, die zwischen gegenüberliegenden Enden des Versteifungsmittels des ersten gekrümmten Bereichs und dem Zwischenrahmen angebracht sind, und wobei der zweite Aktuator zwei Aktuatoren umfasst, die zwischen dem Zwischenrahmen und gegenüberliegenden Enden des Versteifungsmittels des zweiten gekrümmten Bereichs angebracht sind

**11.** Vorrichtung nach Anspruch 9 oder Anspruch 10, wobei die Einschränkmittel zwischen dem ersten Strömungsrohr und dem Zwischenrahmen und/oder zwischen dem Zwischenrahmen und dem zweiten Strömungsrohr angebracht sind.

**12.** Vorrichtung nach einem der vorstehenden Ansprüche, wobei das mindestens eine Strömungsrohr an jeder Seite des gekrümmten Bereichs mit Balg-Mitteln versehen ist, um das entsprechende Strömungsrohr biegsam und verwindungssteif zu machen.

**13.** Verfahren zum Messen von Eigenschaften eines Fluids, die folgenden Schritte umfassend:

- Befördern des Fluids durch mindestens ein Strömungsrohr (2), das mit einem gekrümmten Bereich (4) versehen ist;
- Bewirken, dass der gekrümmte Bereich (4) des Strömungsrohrs (2) vibriert, durch Aktivieren von mindestens einem Aktuator (A1, A2), der an diesen gekoppelt ist; und

- Messen einer Kraft unter Verwendung von mindestens zwei Kraftsensoren (F1, F2), die an gegenüberliegende Enden des gekrümmten Bereichs (4) des Strömungsrohrs (2) gekoppelt sind; **dadurch gekennzeichnet, dass** das Verfahren des weiteren den folgenden Schritt umfasst:

- Einschränken, unter Verwendung von Einschränkmitteln, die mit dem mindestens einen Strömungsrohr (2) gekoppelt sind, der Bewegung des gekrümmten Bereichs (4) dessen in der Richtung eines oder mehrerer Freiheitsgrade.

**14.** Verfahren nach Anspruch 13, wobei ein Vibrationssignal zum Bewirken, dass der mindestens eine Aktuator vibriert, ausgestaltet ist, sodass eine (Anti)Phasenkomponente eines Kraftsignals, das von den Kraftsensoren gemessen wird, minimiert wird, um die Dichte des Fluids zu messen.

**15.** Verfahren nach Anspruch 13, das einschließt, zwei Aktuatoren unter Verwendung von zwei entsprechenden Vibrationssignalen zum Vibrieren zu bringen, wobei das Verhältnis der Kapazitäten der zwei Vibrationssignale ein Maß für das Ungleichgewicht ist, das der Dichte des Fluids entspricht.


**Revendications**

1. Appareil pour mesurer les propriétés d'un fluide, comprenant :

au moins un tube de circulation (2), prévu avec une partie incurvée (4), pour le transport à travers ce dernier, du fluide ;
au moins un actionneur (A1, A2), couplé à la partie incurvée (4) du tube de circulation (2), pour amener la partie incurvée à vibrer ; et
au moins deux capteurs de force (F1, F2), couplés aux extrémités opposées de la partie incurvée (4) du tube de circulation (2), pour mesurer une force appliquée sur cette dernière, à travers le tube de circulation ;
**caractérisé en ce que** l'appareil comprend en outre :

des moyens de restriction, couplés au au moins un tube de circulation (2), pour limiter le mouvement de sa partie incurvée (4) dans la direction d'un ou de plusieurs degrés de liberté.

2. Appareil selon la revendication 1, dans lequel les moyens de restriction sont élastiquement déformables.

3. Appareil selon la revendication 1 ou la revendication 2, dans lequel un axe x est une direction longitudinale du tube de circulation, un axe y s'étend perpendiculairement par rapport à l'axe x dans le plan de la partie incurvée du tube de circulation, et un axe z s'étend perpendiculairement par rapport à l'axe x et à l'axe y ;
dans lequel les moyens de restriction :

permettent la rotation autour de l'axe x, la rotation autour de l'axe y et la translation le long de l'axe z ; et
limitent le mouvement dans la direction d'un ou de plusieurs des degrés de liberté résiduels.

4. Appareil selon la revendication 1 ou la revendication 2, dans lequel les moyens de restriction comprennent un ou plusieurs balestrons qui sont raccordés, au niveau d'une extrémité, au tube de circulation respectif et au niveau d'une extrémité opposée à un châssis de renforcement fixé autour du tube de circulation.

5. Appareil selon la revendication 1 ou la revendication 2, dans lequel les moyens de restriction comprennent l'un parmi les éléments suivantes:

un ou plusieurs ressorts à lames;
une ou plusieurs charnières;
une ou plusieurs tiges.

6. Appareil selon l'une quelconque des revendications précédentes, comprenant des moyens de raidissement (14) couplés à l'extérieur de la partie incurvée (4) du au moins un tube de circulation (2).

7. Appareil selon la revendication 6, dans lequel les moyens de raidissement comprennent un élément formant disque, la partie incurvée du au moins un tube de circulation suivant sensiblement l'intérieur de la circonférence de l'élément formant disque.

8. Appareil selon la revendication 6 ou la revendication 7, dans lequel les moyens de raidissement sont prévus avec des nervures de renforcement.

9. Appareil selon l'une quelconque des revendications précédentes, dans lequel le au moins un tube de circulation comprend :

un premier tube de circulation (60) prévu avec une première partie incurvée (64) ; et
un deuxième tube de circulation (62) qui est fixé parallèlement au premier tube de circulation et prévu avec une deuxième partie incurvée (66), le au moins un actionneur comprenant :

un premier actionneur (80) qui est fixé entre la première partie incurvée (64) et un châssis intermédiaire ; et
un deuxième actionneur (82) qui est fixé entre le châssis intermédiaire et la deuxième partie incurvée (66), deux capteurs de force (84) étant fixés entre des extrémités opposées de la première partie incurvée du châssis intermédiaire, et
deux capteurs de force (86) étant fixés entre le châssis intermédiaire et les extrémités opposées de la deuxième partie incurvée.

10. Appareil selon les revendications 6 et 9, dans lequel le premier actionneur comprend deux actionneurs qui sont fixés entre les extrémités opposées des moyens de raidissement de la première partie incurvée et le châssis intermédiaire, et dans lequel le deuxième actionneur comprend deux actionneurs qui sont fixés entre le châssis intermédiaire et des extrémités opposées des moyens de raidissement de la deuxième partie incurvée.

11. Appareil selon la revendication 9 ou revendication 10, dans lequel les moyens de restriction sont fixés entre le premier tube de circulation et le châssis intermédiaire et/ou entre le châssis intermédiaire et le deuxième tube de circulation.

12. Appareil selon l'une quelconque des revendications précédentes, dans lequel le au moins un tube de circulation est prévu de chaque côté de la partie incurvée avec des moyens formant soufflets pour permettre au tube de circulation respectif de présenter un jeu à la flexion et une rigidité à la torsion.

13. Procédé pour mesurer les propriétés d'un fluide, comprenant les étapes suivantes consistant à :

transporter le fluide à travers au moins un tube de circulation (2) prévu avec une partie incurvée (4) ;
amener la partie incurvée (4) du tube de circulation (2) à vibrer en activant au moins un actionneur (A1, A2) couplé à cette dernière ; et
mesurer une force en utilisant au moins deux capteurs de force (F1, F2) couplés aux extrémités opposées de la partie incurvée (4) du tube de circulation (2) ;
**caractérisé en ce que** le procédé comprend l'étape suivante consistant à :

limiter, en utilisant des moyens de restriction couplés au au moins un tube de circulation (2), le mouvement de sa partie incurvée (4) dans la direction d'un ou de plusieurs degrés de liberté.

14. Procédé selon la revendication 13, dans lequel on adapte un signal de vibration pour amener le au moins un actionneur à vibrer, donc un composant d'(anti)phase d'un signal de force mesuré par les capteurs de force est minimisé pour mesurer la densité du fluide.

15. Procédé selon la revendication 13, comprenant l'étape consistant à amener les deux actionneurs à vibrer en utilisant deux signaux de vibration respectifs, dans lequel le rapport des capacités des deux signaux de vibration est une mesure du déséquilibre correspondant à la densité du fluide.

Fig 1

Fig 2

Fig 3

EP 2 100 106 B1

Fig 4

Fig 5

304 300 302

Fig 6

304 312 302
310 314

Fig 7

304 320 302 320
304

Fig 8

304 330 302

Fig 9

340
304 302

Fig 10

352
304 302
352 350 352

Fig 11

Fig 12

Fig 13

Fig 14

Fig 15

Fig 16

Fig 17

Fig 18

Fig 19

776

778

774

778

762

Fig 20

824

802

830

800

804

Fig 21

902

900

930

924

Fig 22

904

Fig 23

**EP 2 100 106 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4776220 A
- US 6598488 B1